# EUROPÄISCHE PATENTANMELDUNG

(11) **EP 4 834 965 A1**
(43) Veröffentlichungstag der Anmeldung: **04.11.2026**
(21) Anmeldenummer: 25173170.9
(22) Anmeldetag: 29.04.2025
(51) Int. Cl.: C08G 18/08, C08G 18/12, C08G 18/42, C08G 18/66, C08G 18/73

(54) **POLYURETHANPREPOLYMER**

(71) Anmelder: Evonik Operations GmbH, 45128 Essen (DE)
(72) Erfinder: PUKROP, Denis, 48249 Dülmen (DE); HERDA, Silvia, 44623 Herne (DE); STREUKENS, Guido, 42111 Wuppertal (DE)
(74) Vertreter: Evonik Patent Association

(57) **Zusammenfassung**

Gegenstand der Erfindung ist ein Polyurethanprepolymer, das erhältlich ist über Umsetzung mindestens eines (cyclo)aliphatischen Diisocyanats, mindestens eines Hexandiol-basierten Polyesters mit einem zahlenmittleren Molekulargewicht von 500 - 4.000 g/mol und mindestens eines Alkohols, nachfolgende Hydrophilierung mit mindestens einem Hydrophilierungsmittel und Umsetzung mit mindestens einem Amin, sowie ein Verfahren zur Herstellung des Prepolymers, eine das Prepolymer enthaltende Polyurethandispersion und die Verwendung des Prepolymers und der Polyurethandispersion.

## Beschreibung

Die vorliegende Erfindung bezieht sich auf Polyurethanprepolymere. Polyurethanprepolymere sind u.a. erforderlich für die Herstellung wässriger Polyurethandispersionen. Wässrige Polyurethandispersionen haben in den letzten Jahrzehnten auf dem Sektor der Beschichtungen, Klebstoffe, Dichtstoffe und Kunststoffe immer mehr an Bedeutung gewonnen. Die Gründe hierfür sind vielfältig: Einfache Anwendbarkeit, gute Performance, geringe bis gar keine Toxizität und natürlich die Möglichkeit des Verzichts auf organische Lösemittel. Insbesondere festkörperreiche Polyurethandispersionen, die sich dazu eignen, anstatt von Lösemitteln als VOC-freie Filmbildehilfsmittel verwendet zu werden, sind von großem Interesse.

Polyurethandispersionen basieren üblicherweise auf einem Polyurethanprepolymer, das nach Hydrophilierung und optionaler Umsetzung mit weiteren Reaktanden und/oder Kettenverlängerung in Wasser dispergiert werden kann.

CN 109265648 A offenbart eine VOC-freie, wasserbasierte Polyurethandispersion, bei deren Herstellung ein Polyurethanprepolymer aus einem Polyisocyanat, einem Dihydroxylpolymer und einem Hydrophilierungsmittel eingesetzt wird. Das Prepolymer wird mit Harnstoff zu einem Harnstoffgruppen-haltigen Polymer umgesetzt, das wiederum kettenverlängert und in Wasser dispergiert wird. Nachteilig an dem eingesetzten Harnstoffgruppen-haltigen Polymer ist die deutlich reduzierte Flexibilität, Dehnbarkeit und mangelhafte Beständigkeit gegen Wasser von Beschichtungen auf Basis von PUDs enthaltend die Prepolymere.

CN 104031596 B offenbart eine Polyurethandispersion umfassend ein Prepolymer auf Basis mindestens eines Polyols, mindestens eines Diisocyanats, mindestens eines alkoholischen Kettenverlängerers und mindestens eines Hydrophilierungsmittels, das für die Herstellung von Klebstoffen eingesetzt werden kann. Auch diese Dispersion ist jedoch nachteilig, weil sie nur schlechte Chemikalienbeständigkeiten, insbesondere ggü. 50%igem Ethanol, Methylethylketon (vor allem im Double-Rubs-Test), Natronlauge und Essigsäure, aufweisen.

CN 103709361 B offenbart eine wässrige Polyurethandispersion, die ein Prepolymer auf Basis eines aliphatischen oder cycloaliphatischen Diisocyanats, eines Polyesterpolyols aus 1,3-Propylenglykol und einer Di- oder Trisäure mit einem Molekulargewicht von mindestens 200 g/mol, sowie auf Basis eines oder mehrerer Alkohole aufweist, das nach Herstellung hydrophiliert und mit einem oder mehreren Aminen umgesetzt wurde.

Beschichtungen aus Dispersionen umfassend das in CN 103709361 B offenbarte Prepolymer weisen nur unzureichende Pendelhärten und Lösemittelbeständigkeiten, insbesondere ggü. Methylethylketon, auf. Weiterhin sind Beschichtungen aus diesen Dispersionen nur unzureichend belastbar. Entsprechende Folien sind derart tacky, dass Zugfestigkeiten und Weiterreißfestigkeiten nicht ermittelt werden können. Zu guter Letzt eignen sich entsprechende Prepolymere nicht für die Verwendung als Filmbildehilfsmittel. Abgemischt in Standard-PUDs resultieren derart spröde und unzureichende Filme, dass eine Ausprüfung nicht möglich/sinnvoll ist. Bei Raumtemperatur bilden die PUDs keinen ausprüfbaren Film.

Es stellt sich vorliegend die Aufgabe, ein entsprechendes Prepolymer zur Verfügung zu stellen, das sich für die Verwendung als Filmbildehilfsmittel (Lösemittel-Ersatz) eignet, um VOC-freie Polyurethandispersionen formulieren zu können. Weiterhin ist eine Aufgabe der vorliegenden Erfindung, Dispersionen zur Verfügung zu stellen, die mechanisch belastbar sind (mit guten Prüfergebnissen im Hinblick auf Pendelhärte, Gitterschnittprüfung und Flexibilität), sowie gute chemische Beständigkeiten, insbesondere ggü. Methylketon, liefern.

Die vorliegende Aufgabe wird gelöst durch das erfindungsgemäße Polyurethanprepolymer, das erhältlich ist über I) Umsetzung mindestens eines (cyclo)aliphatischen Diisocyanats, mindestens eines Hexandiol-basierten Polyesters mit einem zahlenmittleren Molekulargewicht von 500 - 4.000 g/mol und mindestens eines Alkohols, II) nachfolgende Hydrophilierung mit mindestens einem Hydrophilierungsmittel und III) Umsetzung mit mindestens einer aminogruppenhaltigen Verbindung.

Das erfindungsgemäße Polyurethanprepolymer basiert somit zunächst auf einem Polyurethanprepolymer, das aus der Umsetzung von mindestens einem Diisocyanat, mindestens einem Polyester und mindestens einem Alkohol stammt.

Das mindestens eine Diisocyanat ist mindestens ein (cyclo)aliphatisches Diisocyanat, d. h. mindestens ein Diisocyanat mit cyclisch und/oder aliphatisch gebundenen Isocyanatgruppen. Systeme auf Basis von Verbindungen mit aromatisch gebundenen Isocyanatgruppen (d. h. nicht (cyclo)aliphatische Verbindungen) führen zu nachteiligen Eigenschaften, insbesondere im Hinblick auf Vergilbung.

Bevorzugt sind alle Diisocyanate, die zur Herstellung des erfindungsgemäßen Polyurethanprepolymers eingesetzt werden, (cyclo)aliphatische Diisocyanate. Weiter bevorzugt wird nur ein Diisocyanat eingesetzt, bei dem es sich um ein (cyclo)aliphatisches Diisocyanat handelt.

Bevorzugt wird das mindestens eine Diisocyanat ausgewählt aus der Gruppe bestehend aus HDI (Hexamethylendiisocyanat), PDI (Pentamethylendiisocyanat) TMDI (ein Gemisch aus 2,2,4- und 2,4,4-Trimethyl-Hexamethylendiisocyanat), H12MDI (4,4'-Methylen-bis-(cyclohexylisocyanat)), CHDI (1,4-Diisocyanatocyclohexan), IPDI (Isophorondiisocyanat), TMXDI (o-Tetramethylxylylendiisocyanat, m-Tetramethylxylylendiisocyanat, p-Tetramethylxylylendiisocyanat oder Gemische davon), XDI (o-Xylylendiisocyanat, m-Xylylendiisocyanat, p-Xylylendiisocyanat oder Gemische davon). Noch weiter bevorzugt wird das mindestens eine Diisocyanat ausgewählt aus HDI, TMDI, H12MDI und IPDI. Die besten Ergebnisse resultieren, wenn das Diisocyanat TMDI ist.

Der Diisocyanatanteil des Prepolymers vor Hydrophilierung und Umsetzung mit aminogruppenhaltiger Verbindung beträgt bevorzugt 10 - 60 Gew.-%, weiter bevorzugt 20 - 55 Gew.-%, noch weiter bevorzugt 25 - 50 Gew.-%, bezogen auf die Gesamtmasse des Prepolymers. Somit beträgt der Gewichtsprozentanteil an Diisocyanat, bezogen auf die Masse an Diisocyanat, Hexandiol-basiertem Polyester und Alkohol, bei der Synthese des Prepolymers vor Hydrophilierung und Umsetzung mit Amin bevorzugt 10 - 60 Gew.-%, weiter bevorzugt 20 - 55 Gew.-%, noch weiter bevorzugt 25 - 50 Gew.-%

Das erfindungsgemäße Polyurethanprepolymer basiert weiterhin auf mindestens einem Hexandiol-basierten Polyester mit einem zahlenmittleren Molekulargewicht von 500 - 4.000 g/mol. Das spezifisch zu analysierende Molekulargewicht wird nach DIN EN ISO 13885-1 unter Verwendung von GPC und THF als Eluent bestimmt. Bevorzugt sind alle eingesetzten Polyester Hydroxygruppen-terminiert. Bevorzugt einsetzbare Hydroxygruppen-terminierte Polyester sind solche, die formal von mindestens einem Diol und mindestens einer Dicarbonsäure abgeleitet sind.

Bevorzugt sind alle Polyester, die zur Herstellung des erfindungsgemäßen Polyurethanprepolymers eingesetzt werden, Hexandiol-basierte Polyester mit einem Molekulargewicht von 500 - 4.000 g/mol. Weiter bevorzugt wird nur ein Polyester eingesetzt, bei dem es sich um einen Hexandiol-basierten Polyester mit einem Molekulargewicht von 500 - 4.000 g/mol handelt.

Der mindestens eine Hexandiol-basierte Polyester basiert auf Hexandiol, d. h., der zu seiner Herstellung eingesetzte Diol ist im Wesentlichen Hexandiol, bevorzugt n-Hexandiol. Prinzipiell kann bei seiner Synthese noch mindestens ein weiterer Diol eingesetzt werden. Wird bei der Synthese des Polyesters noch anderer Diol neben Hexandiol eingesetzt, handelt es sich bei diesem bevorzugt um mindestens einen Diol ausgewählt aus der Gruppe bestehend aus Ethylenglykol, n-Propylenglykol, i-Propanglykol, 2-Methyl-1,3-Propandiol, n-Butylenglykol und n-Pentylglykol, Diethylenglykol, 1,4-Cyclohexandimethanol, Tripropylenglykol und 1,10-Decandiol.

Bevorzugt beträgt der Anteil an Hexandiol, insbesondere n-Hexandiol, bezogen auf die Gesamtmasse an eingesetztem Diol bei der Synthese von Hexandiol-basiertem Polyester, 50 - 100 Gew.-%, weiter bevorzugt 70 - 100 Gew.-%, noch weiter bevorzugt 90 - 100 Gew.-%. Ganz besonders bevorzugt ist Hexandiol, insbesondere n-Hexandiol, der einzige für die Herstellung des Hexandiol-basierten Polyesters eingesetzte Diol, d.h. sein Anteil, bezogen auf die Gesamtmasse an eingesetztem Diol bei der Synthese von Hexandiol-basiertem Polyester, beträgt 100 Gew.-%.

Der mindestens eine Polyester leitet sich weiterhin bevorzugt von mindestens einer Dicarbonsäure ab. Bevorzugt handelt es sich dabei um eine Dicarbonsäure. Weiter bevorzugt ist die Dicarbonsäure ausgewählt aus Adipinsäure, Bernsteinsäure und Phthalsäure.

Der Polyesteranteil des Prepolymers vor Hydrophilierung und Umsetzung mit Amin beträgt bevorzugt 30 - 89 Gew.-%, weiter bevorzugt 40 - 79 Gew.-%, noch weiter bevorzugt 47 - 74 Gew.-%, bezogen auf die Gesamtmasse des Prepolymers. Somit beträgt der Gewichtsprozentanteil an Polyester, bezogen auf die Masse an Diisocyanat, Polyester und Alkohol, bei der Synthese des Prepolymers bevorzugt 30 - 89 Gew.-%, weiter bevorzugt 40 - 79 Gew.-%, noch weiter bevorzugt 47 - 74 Gew.-%.

Das Prepolymer basiert weiterhin auf mindestens einem Alkohol. Bei diesem Alkohol handelt es sich nicht um einen Polyester, insbesondere nicht um einen Polyesterpolyol. Bevorzugt einsetzbare Alkohole können ausgewählt werden aus der Gruppe bestehend aus Diolen und Triolen mit einem Molekulargewicht zwischen 50 und 300 g/mol. Weiter bevorzugt werden zwei Alkohole ausgewählt aus Diolen und Triolen mit einem Molekulargewicht zwischen 100 und 200 g/mol eingesetzt. Ebenfalls weiter bevorzugt kann der mindestens eine Alkohol ausgewählt werden aus der Gruppe bestehend aus 1,4-Butandiol, 1,5-Pentadiol, 1,2 Propandiol, 1,3 Propandiol, Neopentylglykol, Propan-1,2,3-triol, 1,1,1-Trimethylolpropan und Hexan-1,2,6-triol. Ganz besonders bevorzugt werden zwei Alkohole eingesetzt, bei denen es sich um Neopentylglykol und 1,1,1-Trimethylolpropan handelt.

Der Alkoholanteil des Prepolymers vor Hydrophilierung und Umsetzung mit Amin beträgt bevorzugt 1 - 10 Gew.-%, weiter bevorzugt 1 - 5 Gew.-%, noch weiter bevorzugt 1 - 3 Gew.-%, bezogen auf die Gesamtmasse des Prepolymers. Somit beträgt der Gewichtsprozentanteil an Alkohol, bezogen auf die Masse an Diisocyanat, Polyester und Alkohol, bei der Synthese des Prepolymers bevorzugt 1 - 10 Gew.-%, weiter bevorzugt 1 - 5 Gew.-%, noch weiter bevorzugt 1 - 3 Gew.-%.

Die Umsetzung zum Polyurethanprepolymer I) kann durch Vermischen und Erhitzen von mindestens einem (cyclo)aliphatischen Diisocyanat, mindestens einem Hexandiol-basierten Polyester mit einem Molekulargewicht von 500 - 4.000 g/mol und mindestens einem Alkohol erfolgen. Bevorzugt betragen dabei die Anteile an (cyclo)aliphatischem Diisocyanat, Hexandiol-basiertem Polyester mit einem Molekulargewicht von 500 - 4.000 g/mol und Alkohol die oben genannten Gewichtsprozentanteile, bezogen auf die Masse an Edukt.

Besonders bevorzugt wird dabei der mindestens eine hydroxygruppenterminierte Polyester vorgelegt und erhitzt. Anschließend wird das mindestens eine Diisocyanat und im Anschluss der mindestens eine Alkohol zugegeben. Bevorzugt erfolgt die Umsetzung bei Temperaturen zwischen 50 und 120 °C. Sie wird bevorzugt durchgeführt, bis alle Isocyanatgruppen abreagiert sind.

Die Umsetzung zum Polyurethanprepolymer erfolgt bevorzugt in Gegenwart mindestens eines Lösemittels. Weiter bevorzugt ist das mindestens eine Lösemittel ausgewählt aus der Gruppe bestehend aus Benzol, Essigsäureethylester, Aceton, Methylethylketon, Diethylether, Tetrahydrofuran, Essigsäuremethylester, Acetonitril, Chloroform, Methylenchlorid, Tetrachlorkohlenstoff, 1,2-Dichlorethan, 1,1,2-Trichlorethan, Tetrachlorethylen oder Mischungen davon. Weiter bevorzugt wird das mindestens eine Lösemittel ausgewählt aus der Gruppe der polaren organischen Lösemittel. Noch weiter bevorzugt erfolgt die Hydrophilierung in Gegenwart eines Lösemittels. Bevorzugte Lösemittel können ausgewählt werden aus der Gruppe bestehend aus Aceton, Ethylacetat, Methylethylketon und Diethylether. Ganz besonders bevorzugt ist das Lösemittel Aceton.

Der Gewichtsprozentanteil des mindestens einen Lösemittels, bezogen auf die Gesamtmasse der Zusammensetzung bei der Synthese des Prepolymers, beträgt bevorzugt 10 - 40 Gew.-%, weiter bevorzugt 15 - 35 Gew.-%, noch weiter bevorzugt 20 - 30 Gew.-%.

Das in Schritt I) erhaltene Prepolymer wird im Anschluss in Schritt II) hydrophiliert. Die Hydrophilierung erfolgt dadurch, dass zum Produkt von I) mindestens ein Hydrophilierungsmittel zugegeben wird.

Bei dem mindestens einen Hydrophilierungsmittel handelt es sich bevorzugt um mindestens ein Hydrophilierungsmittel ausgewählt aus der Gruppe bestehend aus Hydroxy- und/oder Aminogruppen-funktionalisierten Sulfonsäuren und Hydroxy- und/oder Aminogruppen-funktionalisierten Sulfonsäurederivaten. Weiter bevorzugt ist das Hydrophilierungsmittel ausgewählt aus der Gruppe bestehend aus Hydroxy- und/oder Aminogruppen-funktionalisierten Sulfonsäurederivaten. Noch weiter bevorzugt ist das Sulfonsäurederivat ein Sulfonsäuresalz. Ganz besonders bevorzugt ist das Sulfonsäuresalz ein Lithium-, Natrium-, Kalium- oder Cäsiumsalz einer Sulfonsäure ausgewählt aus der Gruppe bestehend aus Hydroxyethylsulfonsäure, Hydroxypropylsulfonsäure, Hydroxybutylsulfonsäure, Aminoethylsulfonsäure, Aminopropylsulfonsäure, Aminobutylsulfonsäure und 2-[(2-Aminoethyl)aminoethan]sulfonsäure.

Noch weiter bevorzugt ist das Hydrophilierungsmittel ein Aminogruppen-funktionalisiertes Sulfonsäuresalz. Ganz besonders bevorzugt ist das Natriumsalz der 2-[(2-Aminoethyl)aminoethan]sulfonsäure (Hauptbestandteil des Verkaufsproduktes VESTAMIN A95 der Evonik Industries AG).

Bevorzugt beträgt der Gewichtsprozentanteil des für die Herstellung eingesetzten Hydrophilierungsmittels, bezogen auf die Masse des bei der Hydrophilierung eingesetzten Produktes von Schritt I), 5 - 15 Gew.-%, weiter bevorzugt 7,5 - 13 Gew.-%, noch weiter bevorzugt 9 - 12 Gew.-%. Somit beträgt bei dem Verfahren zur Herstellung des erfindungsgemäßen Polyurethanprepolymers der Gewichtsprozentanteil des für die Herstellung eingesetzten Hydrophilierungsmittels, bezogen auf die Masse des bei der Hydrophilierung eingesetzten Produktes von Schritt I), 5 - 15 Gew.-%, weiter bevorzugt 7,5 - 13 Gew.-%, noch weiter bevorzugt 10 - 12 Gew.-%.

Die Hydrophilierung erfolgt bevorzugt in Gegenwart mindestens eines Lösemittels. Weiter bevorzugt wird das mindestens eine Lösemittel ausgewählt aus der Gruppe der polaren organischen Lösemittel. Noch weiter bevorzugt erfolgt die Hydrophilierung in Gegenwart eines Lösemittels. Bevorzugte Lösemittel können ausgewählt werden aus der Gruppe bestehend aus Aceton, Ethylacetat, Methylethylketon und Diethylether. Ganz besonders bevorzugt ist das Lösemittel Aceton. Das mindestens eine Lösemittel kann auch bereits bei der Synthese des Prepolymers eingesetzt worden sein.

Der Gewichtsprozentanteil des mindestens einen Lösemittels, bezogen auf die Gesamtmasse an Verfahrensprodukt von Schritt I), Hydrophilierungsmittel und Lösemittel, beträgt bevorzugt 25 - 75 Gew.-%, weiter bevorzugt 30 - 70 Gew.-%, noch weiter bevorzugt 40 - 60 Gew.-%.

Bevorzugt wird die Hydrophilierung so durchgeführt, dass das Verfahrensprodukt von I) auf eine Temperatur von 30 - 70 °C, weiter bevorzugt 40 - 60 °C, noch weiter bevorzugt 45 - 55 °C gebracht, mindestens ein Teil des mindestens einen Lösemittels zugegeben und das Hydrophilierungsmittel zugegeben wird. Wird bei der Hydrophilierung anfangs das Lösemittel nicht vollständig zugegeben, erfolgt die Zugabe des restlichen Lösemittels während und nach der Zugabe des Hydrophilierungsmittels, bevorzugt während der Zugabe des Hydrophilierungsmittels.

Produkt des Hydrophilierungsschrittes II) ist ein hydrophiliertes Prepolymer.

Weiter bevorzugt kann das hydrophilierte Prepolymer bereits zu Abschluss von Schritt II) in Wasser dispergiert und im Anschluss daran das mindestens eine Lösemittel entfernt werden.

Das hydrophilierte Prepolymer wird in Schritt III) mit mindestens einer aminogruppenhaltigen Verbindung umgesetzt. Bevorzugt erfolgt die Umsetzung mit einer aminogruppenhaltigen Verbindung.

Bevorzugt hat die mindestens eine aminogruppenhaltige Verbindung eine Molmasse von 50 - 400 g/mol.

Unter einer aminogruppenhaltigen Verbindung im Sinne der vorliegenden Erfindung ist eine organische Verbindung mit mindestens einer Aminogruppe zu verstehen. Bevorzugt weist die aminogruppenhaltige Verbindung mindestens zwei funktionelle Gruppen auf, von denen mindestens eine eine Aminogruppe ist. Ggf. vorhandene weitere funktionelle Gruppen können bevorzugt ausgewählt werden aus der Gruppe bestehend aus Hydroxygruppen, Harnstoffgruppen, und Estergruppen. Bevorzugte aminogruppenhaltige Verbindungen sind somit Di- und Polyamine und Hydroxyamine.

Bevorzugt weist die aminogruppenhaltige Verbindung weiterhin in Summe 2 bis 4, noch weiter bevorzugt 2 bis 3 funktionelle Gruppen auf.

Bevorzugte aminogruppenhaltige Verbindungen können ausgewählt werden aus der Gruppe bestehend aus Ethylendiamin, N,N-Dimethylethanolamin, N,N-Diethylaminoethanol, Ethanolamin, 2-Amino-2-methylpropanol und Diethanolamin.

Der Gewichtsprozentanteil der mindestens einen aminogruppenhaltigen Verbindung, bezogen auf die Gesamtmasse an hydrophiliertem Prepolymer nach Schritt II), beträgt bevorzugt 0,1 - 5 Gew.-%, weiter bevorzugt 0,1 - 3 Gew.-%, noch weiter bevorzugt 0,1 - 1,5 Gew.-%.

Bevorzugt wird die Umsetzung mit der mindestens einen aminogruppenhaltigen Verbindung so durchgeführt, dass das Verfahrensprodukt von II) auf eine Temperatur von 30 - 70 °C, weiter bevorzugt 40 - 60 °C, noch weiter bevorzugt 45 - 55 °C gebracht wird, und dann die mindestens eine aminogruppenhaltige Verbindung zugegeben wird.

Wurde nach der Hydrophilierung das mindestens eine Lösemittel noch nicht entfernt, kann die Umsetzung mit der mindestens einen aminogruppenhaltigen Verbindung in Gegenwart des Lösemittels (und in Gegenwart von ggf. bereits zugesetztem Wasser) erfolgen. Wurde das Lösemittel bereits entfernt, erfolgt die Zugabe der mindestens einen aminogruppenhaltigen Verbindung in Gegenwart von Wasser. Liegt nach Umsetzung mit der mindestens einen aminogruppenhaltigen Verbindung III) noch kein Wasser vor, wird das erhaltene hydrophilierte und mit aminogruppenhaltiger Verbindung umgesetzte Prepolymer bevorzugt in Wasser dispergiert.

Gegenstand der vorliegenden Erfindung ist somit auch ein Verfahren zur Herstellung eines Polyurethanprepolymers bei dem
I) mindestens ein (cyclo)aliphatisches Diisocyanat, mindestens ein Hexandiol-basierter Polyester mit einem zahlenmittleren Molekulargewicht von 500 - 4.000 g/mol und mindestens ein Alkohol vermischt und erhitzt,
II) zu dem Produkt von Schritt I) mindestens ein Hydrophilierungsmittel gegeben und
III) das hydrophilierte Prepolymer aus Schritt II) mit mindestens einer aminogruppenhaltigen Verbindung umgesetzt wird.

Das erfindungsgemäße Prepolymer eignet sich weiterhin für die Herstellung von Polyurethandispersionen, die für vielfältige Anwendungen geeignet sind. Diese erfindungsgemäßen Polyurethandispersionen umfassen mindestens ein erfindungsgemäßes Prepolymer und Wasser.

Bevorzugt lassen sich die erfindungsgemäßen Polyurethandispersionen herstellen über ein Verfahren, bei dem
I) mindestens ein (cyclo)aliphatisches Diisocyanat, mindestens ein Hexandiol-basierter Polyester mit einem zahlenmittleren Molekulargewicht von 500 - 4.000 g/mol und mindestens ein Alkohol vermischt und erhitzt,
II) zu dem Produkt von Schritt I) mindestens ein Hydrophilierungsmittel gegeben und
III) das hydrophilierte Prepolymer aus Schritt II) mit mindestens einer aminogruppenhaltigen Verbindung umgesetzt wird
IV) und entweder
   a. nach Schritt II) eine Dispersion des Verfahrensproduktes von Schritt I) oder
   b. nach Schritt III) eine Dispersion des hydrophilierten Prepolymers
in Wasser erfolgt.

Diese Dispersionen eignen sich besonders bevorzugt für den Einsatz als Filmbildehilfsmittel. Gegenstand der vorliegenden Erfindung ist somit auch die Verwendung der erfindungsgemäßen Prepolymere und der erfindungsgemäßen Polyurethandispersionen als Filmbildehilfsmittel.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

Zur Herstellung von Prepolymeren wurden zunächst die in Tabelle 1 aufgeführten Komponenten für Beispiel 1 (erfindungsgemäß) und für Beispiel 2 (nicht erfindungsgemäß) ohne Diisocyanat in den Reaktor vorgelegt und auf 50 - 80 °C erhitzt, dann gerührt und das Diisocyanat hinzugefügt.

Bei Erreichen des theoretischen NCO-Wertes war die Reaktion des Prepolymers abgeschlossen.

Im Anschluss wurden die erhaltenen Prepolymere mit Aceton weiter verdünnt, daraufhin mit Aminosulfonsäuresalz hydrophiliert und mit Diethanolamin unter Rühren bei Rückfluss des Acetons umgesetzt und schließlich unter Zugabe des Wassers unter Phasenumkehr zur Polyurethandispersion verarbeitet.

Die erhaltenen Polyurethandispersion wurden bei 80 °C innerhalb von einer halben Stunde im Umlufttrockenschrank auf metallischem Substrat ausgehärtet und den in Tabelle 2 aufgeführten Ausprüfungen unterzogen.

**Tabelle 1:**

| | **Beispiel 1** | **Beispiel 2** |
|---|---|---|
| | Einwaagen [Gew.-%] | Einwaagen [Gew.-%] |
| **Synthese Prepolymer** | | |
| Trimethylhexamethylendiisocyanat (VESTANAT TMDI) | 24,51 | 17,88 |
| Hexandiol-basierter Polyester (Oxyester T1136) | 49,22 | - |
| 1,2-Propandiol-basierter Polyester (DYNAPOL LS 615) | - | 28,47 |
| 1,4-Butandiol | - | 1,23 |
| Neopentylglykol | 0,77 | 1,69 |
| Trimethylolpropan | 0,50 | 0,73 |
| Aceton | 25,00 | 50,00 |
| | | |

| **Hydrophilierung und Umsetzung mit Amin** | | |
|---|---|---|
| Prepolymer | 47,12 | 66,51 |
| Aceton | 23,56 | - |
| VESTAMIN A95 | 5,15 | 7,92 |
| Diethanolamin | 0,30 | 0,47 |
| dest. H₂O | 23,87 | 25,10 |

**Tabelle 2:**

| | **Beispiel 1** | **Beispiel 2** |
|---|---|---|
| **Dispersion** | | |
| pH-Wert | 7,0 | 7,0 |
| Viskosität [mPas] (23°C) | hochviskos, pastös | hochviskos, pastös |
| | | |

| **gehärtete Schicht** | | |
|---|---|---|
| Gitterschnittprüfung¹ | 3 | 0 |
| Tiefungsversuch nach Erichsen² | > 7,5 | > 7,0 |
| Pendelhärte 7Tage³ | 20 | 10 |
| Kugelschlagprüfung [Einbeulung]⁴ | > 80 | > 80 |
| | | |
| Lösemittelbeständigkeit nach 7 Tagen⁵ | | |
| MEK [Doppelhübe] | 150 | 1 |
| EtOH [Doppelhübe] | 5, klebt | 1 |
| | | |
| Zugfestigkeit [MPA]⁶ | 16 | nicht messbar |
| Dehnung [%]⁷ | 1791 | nicht messbar |
| Spannung bei 100 % Dehnung MPa | 1,5 | nicht messbar |
| Spannung bei 200 % Dehnung MPa | 1,9 | nicht messbar |
| Spannung bei 300 % Dehnung MPa | 2,3 | nicht messbar |
| Weiterreißfestigkeit [N/mm]⁸ | 70 | nicht messbar |

| | | |
|---|---|---|
| ¹ DIN EN ISO 2409 ² DIN EN ISO 1520 ³ DIN EN ISO 1522 ⁴ DIN EN ISO-6272-1 ⁵ ASTM D 4752 ⁶ DIN EN ISO 527 ⁷ DIN EN ISO 527 ⁸ DIN 53363 | | |

## Patentansprüche

1. Polyurethanprepolymer, erhältlich über
I) Umsetzung
a) mindestens eines (cyclo)aliphatischen Diisocyanats,
b) mindestens eines Hexandiol-basierten Polyesters mit einem zahlenmittleren Molekulargewicht von 500 - 4.000 g/mol und
c) mindestens eines Alkohols,
II) nachfolgende Hydrophilierung mit mindestens einem Hydrophilierungsmittel und
III) Umsetzung mit mindestens einer aminogruppenhaltigen Verbindung.

2. Polyurethanprepolymer nach Anspruch 1,
**dadurch gekennzeichnet, dass**
das mindestens eine (cyclo)aliphatische Diisocyanat ausgewählt ist aus der Gruppe bestehend aus HDI, PDI, TMDI, H12MDI, CHDI, IPDI, TMXDI und XDI.

3. Polyurethanprepolymer nach Anspruch 1 oder 2,
**dadurch gekennzeichnet, dass**
der Diisocyanatanteil des Prepolymers vor Hydrophilierung und Umsetzung mit Amin 10 - 60 Gew.-%, bezogen auf die Gesamtmasse des Prepolymers, beträgt.

4. Polyurethanprepolymer nach einem der vorhergehenden Ansprüche,
**dadurch gekennzeichnet, dass**
ein Hexandiol-basierter Polyester mit einem Molekulargewicht von 500 - 4.000 g/mol eingesetzt wird.

5. Polyurethanprepolymer nach einem der vorhergehenden Ansprüche,
**dadurch gekennzeichnet, dass**
der mindestens eine Polyester von einer Dicarbonsäure ausgewählt aus Adipinsäure, Bernsteinsäure und Phthalsäure abgeleitet ist.

6. Polyurethanprepolymer nach einem der vorhergehenden Ansprüche,
**dadurch gekennzeichnet, dass**
der Polyesteranteil des Prepolymers vor Hydrophilierung und Umsetzung mit Amin 30 - 89 Gew.-%, bezogen auf die Gesamtmasse des Prepolymers, beträgt.

7. Polyurethanprepolymer nach einem der vorhergehenden Ansprüche,
**dadurch gekennzeichnet, dass**
der Alkohol ausgewählt wird aus der Gruppe bestehend aus Diolen und Triolen mit einem Molekulargewicht zwischen 50 und 300 g/mol.

8. Polyurethanprepolymer nach einem der vorhergehenden Ansprüche,
**dadurch gekennzeichnet, dass**
das Hydrophilierungsmittel ausgewählt ist aus der Gruppe bestehend aus Hydroxy- und/oder Aminogruppen-funktionalisierten Sulfonsäuren und Hydroxy- und/oder Aminogruppen-funktionalisierten Sulfonsäurederivaten.

9. Polyurethanprepolymer nach einem der vorhergehenden Ansprüche,
**dadurch gekennzeichnet, dass**
die aminogruppenhaltige Verbindung ausgewählt ist aus der Gruppe bestehend aus Ethylendiamin, N,N-Dimethylethanolamin, N,N-Diethylaminoethanol, Ethanolamin, 2-Amino-2-methylpropanol und Diethanolamin.

10. Verfahren zur Herstellung eines Polyurethanprepolymers nach einem der vorhergehenden Ansprüche,
**dadurch gekennzeichnet, dass**
I) mindestens ein (cyclo)aliphatisches Diisocyanat, mindestens ein Hexandiol-basierter Polyester mit einem zahlenmittleren Molekulargewicht von 500 - 4.000 g/mol und mindestens ein Alkohol vermischt und erhitzt,
II) zu dem Produkt von Schritt I) mindestens ein Hydrophilierungsmittel gegeben und
III) das hydrophilierte Prepolymer aus Schritt II) mit mindestens einer aminogruppenhaltigen Verbindung umgesetzt wird.

11. Verfahren zur Herstellung einer Polyurethandispersion,
**dadurch gekennzeichnet, dass**
I) mindestens ein (cyclo)aliphatisches Diisocyanat, mindestens ein Hexandiol-basierter Polyester mit einem zahlenmittleren Molekulargewicht von 500 - 4.000 g/mol und mindestens ein Alkohol vermischt und erhitzt,
II) zu dem Produkt von Schritt I) mindestens ein Hydrophilierungsmittel gegeben und
III) das hydrophilierte Prepolymer aus Schritt II) mit mindestens einer aminogruppenhaltigen Verbindung umgesetzt wird
IV) und entweder
i. nach Schritt II) eine Dispersion des Verfahrensproduktes von Schritt I) oder
ii. nach Schritt III) eine Dispersion des hydrophilierten Prepolymers in Wasser erfolgt.

12. Verwendung eines Prepolymers nach einem der Ansprüche 1 - 9 als Filmbildehilfsmittel.

13. Verwendung einer nach dem Verfahren von Anspruch 11 erhältlichen Polyurethandispersion als Filmbildehilfsmittel.
